# EUROPEAN PATENT APPLICATION

(11) **EP 2 838 272 A1**
(43) Date of publication of application: **18.02.2015**
(21) Application number: 12873929.9
(22) Date of filing: 09.10.2012
(51) Int. Cl.: H04N 21/422

(54) **TELEVISION CURSOR MOVING METHOD AND DEVICE**

(30) Priority: 12.04.2012 CN 201210106772
(71) Applicant: Shenzhen TCL New Technology Co., LTD, Shenzhen, Guangdong 518052 (CN)
(72) Inventor: CHEN, Cheng, Shenzhen, Guangdong 518052 (CN); CHEN, Kuang-Lang, Shenzhen, Guangdong 518052 (CN); FU, Yaoyuan, Shenzhen, Guangdong 518052 (CN); HU, Jiawen, Shenzhen, Guangdong 518052 (CN); ZENG, Hong, Shenzhen, Guangdong 518052 (CN)
(74) Representative: Kuhnen & Wacker
(86) International application number: PCT/CN2012/082609
(87) International publication number: WO 2013/152578

(57) **Abstract**

The present disclosure provides a method and a device for moving a cursor of a television. The method includes: obtaining a two-dimensional code value of a two-dimensional code reading device on a two-dimensional code graph paper in real time; calculating absolute coordinates of the cursor according to the two-dimensional code value and a position of the current cursor; and re-displaying the cursor according to the absolute coordinates. The present disclosure realizes the movement of the cursor through two-dimensional code technology, which reduces the difficulty of the operation and is suitable for use to satisfy people's requirements.

## Description

### BACKGROUND

### 1. Technical Field

The present invention relates to display terminals, and particularly, to a method and a device for moving a cursor of a television.

### 2. Description of Related Art

With the development of the electrical technology, network smart televisions have obtained popularity in people's daily life. At present, the cursor on the network smart television is generally moved by a controller or a mouse; however, when users use the controller to perform operations, for example, browsing websites, the reacting speed of the cursor on the browser is relatively slow; when users use the mouse to perform corresponding operations, a controller has to be used in combination; moreover, at this situation the mouse must be kept flat, which may lead to arm tension due to prolonged mouse operations. There is an urgent need to solve these problems.

### SUMMARY

The main purpose of the invention is to provide a method and a device for moving a cursor of a television aiming to reduce the difficulty of the operation of moving a cursor of a network smart television.

In order to achieve the above object, a method for moving a cursor of a television is provided, including:
obtaining a two-dimensional code value of a two-dimensional code reading device on a two-dimensional code graph paper in real time;
calculating absolute coordinates of the cursor according to the two-dimensional code value and a position of the current cursor; and
re-displaying the cursor according to the absolute coordinates.

Preferably, the step of calculating absolute coordinates of the cursor according to the two-dimensional code value and a position of the current cursor includes:
obtaining a relative value of the movement of the two-dimensional code reading device on the two-dimensional code graph paper according to the two-dimensional code value, and calculating the absolute coordinates of the cursor according to the relative value and the position of the current cursor.

Preferably, the method further includes following steps before the step of re-displaying the cursor according to the absolute coordinates:
temporarily storing the absolute coordinates;
when there are at least two of the absolute coordinates being temporarily stored, synthesizing the absolute coordinates and temporarily storing the synthesized absolute coordinates as new absolute coordinates; and
reading the new absolute coordinates which are temporarily stored.

Preferably, the method further includes the following step after the step of reading the new absolute coordinates which are temporarily stored:
when the difference between the coordinates of the current cursor and the read absolute coordinates is greater than a preset value, dividing the absolute coordinates into at least two continuous absolute coordinates.

Preferably, the method further includes following steps before the step of re-displaying the cursor according to the absolute coordinates:
temporarily storing the absolute coordinates;
when there are at least two of the absolute coordinates being temporarily stored, synthesizing the absolute coordinates and temporarily storing the synthesized absolute coordinates as new absolute coordinates; and
reading the new absolute coordinates which are temporarily stored.

Preferably, the method further includes the following step after the step of reading the new absolute coordinates which are temporarily stored:
when the difference between the coordinates of the current cursor and the read absolute coordinates is greater than a preset value, dividing the absolute coordinates into at least two continuous absolute coordinates.

The present disclosure further provides a device for moving a cursor of a television, including:
an obtaining module configured for obtaining a two-dimensional code value of a two-dimensional code reading device on a two-dimensional code graph paper in real time;
a calculating module configured for calculating absolute coordinates of the cursor according to the two-dimensional code value and a position of the current cursor; and
a displaying module configured for re-displaying the cursor according to the absolute coordinates.

Preferably, the calculating module is further configured for calculating a relative value of the movement of the two-dimensional code reading device on the two-dimensional code reading device according to the two-dimensional code value, and calculating absolute coordinates of the cursor according to the relative value and the position of the current cursor.

Preferably, the device further includes:
a storing unit configured for temporarily storing the absolute coordinates;
the calculating module being further configured for, when there are at least two of the absolute coordinates being temporarily stored, synthesizing the absolute coordinates and temporarily storing the synthesized absolute coordinates as new absolute coordinates; and
a reading unit configured reading the new absolute coordinates which are temporarily stored.

Preferably, the device further includes a dividing unit configured for, when the difference between the coordinates of the current cursor and the read absolute coordinates is greater than a preset value, dividing the absolute coordinates into at least two continuous absolute coordinates.

Preferably, the device further includes a storing unit configured for temporarily storing the absolute coordinates;
the calculating module being further configured for, when there are at least two of the absolute coordinates being temporarily stored, synthesizing the absolute coordinates and temporarily storing the synthesized absolute coordinates as new absolute coordinates; and
a reading device configured for reading the new absolute coordinates which are temporarily stored.

Preferably, the device further includes a dividing unit configured for, when the difference between the coordinates of the current cursor and the read absolute coordinates is greater than a preset value, dividing the absolute coordinates into at least two continuous absolute coordinates.

In the present disclosure, the two-dimensional code value of the two-dimensional code reading device on the two-dimensional code graph paper is obtained in real time and is further sent to the television; after the cursor moves, the television calculates the absolute coordinates of the cursor according to the two-dimensional code value, and displays the new cursor corresponding to the absolute coordinates to finish the operation of moving the cursor. Thus, the method for moving a cursor of a television provided in the present disclosure can be easily operated and is suitable for use to satisfy people's requirements.

### DESCRIPTION OF THE DRAWINGS

FIG. 1 is a flow chart of a method for moving a cursor of a television in accordance with an embodiment of the present disclosure;
FIG. 2 is a schematic view of a two-dimensional code graph paper of the method of FIG. 1 in accordance with a first embodiment;
FIG. 3 is a flow chart of a television processing step of the method of FIG. 1 in accordance with a first embodiment;
FIG. 4 is a schematic view of a two-dimensional code graph paper of the method of FIG. 1 in accordance with a second embodiment;
FIG. 5 is a flow chart of a television processing step of the method of FIG. 1 in accordance with a second embodiment;
FIG. 6 is a schematic view of a device for moving a cursor of a television in accordance with an embodiment of the present disclosure;
FIG. 7 is a schematic view of a calculating module of the device of FIG. 6; and
FIG. 8 is a schematic view of a calculating module of the device of FIG. 6 in accordance with a second embodiment.

The realization of the object, features, and advantages of the present disclosure are given in further detail in combination with the embodiments with reference to the accompanying drawings.

### DETAILED DESCRIPTION

It should be understood that the embodiments described herein are only used to explain the present disclosure rather than to limit the present disclosure.

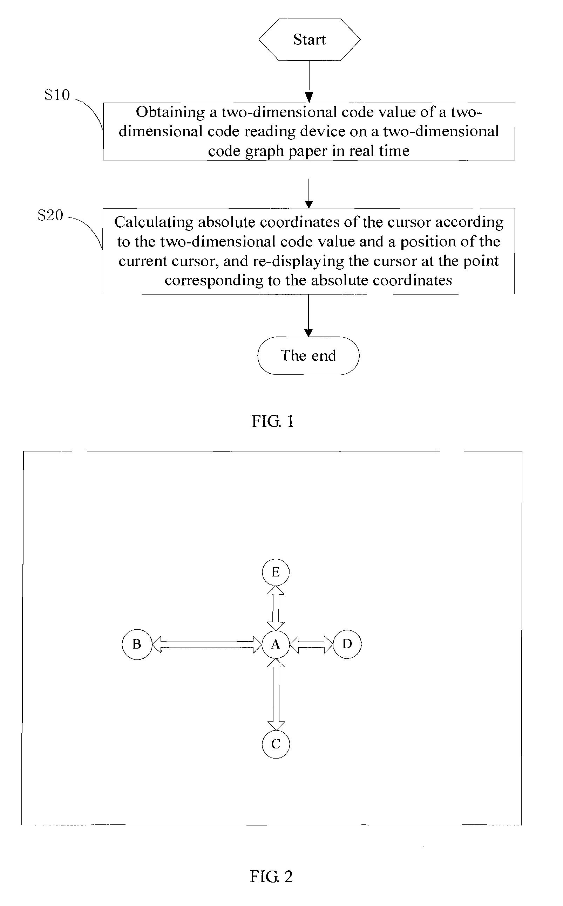

Referring to FIG. 1, which is a flow chart of a method for moving a cursor of a television in accordance with an embodiment of the present disclosure, the method includes steps as follows.

Step S10, obtaining a two-dimensional code value of a two-dimensional code reading device on a two-dimensional code graph paper in real time.

The two-dimensional code graph paper is at first formed to include two-dimensional code coordinate information. When being placed on the two-dimensional code graph paper, the two-dimensional code reading device (such as a talking pen) obtains the two-dimensional code value thereof on the two-dimensional code graph paper in real time and sends the two-dimensional code value to a television. The television receives the two-dimensional code value in real time. Preferably, the two-dimensional code value can be sent to the television by infrared emission.

In the embodiment, preferably, the above two-dimensional code reading device is built in a controller. In other embodiments, the two-dimensional code reading device can be independent of the controller, which is not further limited here.

Step S20, calculating absolute coordinates of the cursor according to the above two-dimensional code value and a position of the current cursor, and re-displaying the cursor according to the above absolute coordinates.

Taking a browser application module of the above television as an example, at first, the browser is started. After the television receives the two-dimensional code value sent from the two-dimensional code reading device, a relative value of the movement of the two-dimensional code reading device on the two-dimensional code graph paper is calculated. By setting the position of the current cursor as a starting point and the relative value as a movement amount, the absolute coordinates of the cursor are calculated and are further sent to the browser.

After receiving the absolute coordinates, the browser erases the current cursor and re-draws a new cursor on the point corresponding to the absolute coordinates, thereby finishing the operation of moving the cursor.

It is noted that the two-dimensional code graph paper is preferable in the embodiment. In other embodiments, the two-dimensional code graph paper can be replaced by other media which can convert the coordinate information of the television to the two-dimensional code value such as a two-dimensional code coordinate board.

In the embodiment of the present disclosure, the two-dimensional code value of the two-dimensional code reading device on the two-dimensional code graph paper is obtained in real time and is further sent to the television; after the cursor moves, the television calculates the absolute coordinates of the cursor according to the two-dimensional code value and the position of the current cursor, and displays the new cursor corresponding to the absolute coordinates to finish the operation of moving the cursor. Thus, the method for moving a cursor of a television provided in the present disclosure can be easily operated and used.

In detail, the above two-dimensional code refers to a bar code which is developed from a one-dimensional code to have another readable dimension. A two-dimensional code uses a special geometric figure to record data character information by alternatively arranging black and white figures on a plane (in two-dimensional directions) according to certain principle. In coding, a two-dimensional code uses a stream of bits which forms the basis of the logics "0" and "1" inside the computer to represent text information and data information, and realizes automatic processing of information by when being automatically recognized and read by an image input devices or an optical scanning devices. A one-dimensional code stores data vertically, however, a two-dimensional code stores data both vertically and horizontally. As a result, compared to a one-dimensional code, a two-dimensional code can record much more data and is capable of recording more complicated data such as images and network links.

About the absolute coordinates: the above cursor is located in a two-dimensional code system which uses the top left corner of the television as an origin thereof, and the distance between the cursor and the origin in the vertical direction and the distance between the cursor and the origin in the horizontal direction are used to determine the position of the cursor in both the horizontal and vertical directions. For example, if the distance between a point at the center of the cursor and the top left corner of the television in the horizontal direction is x, and the distance between the center of the cursor and the top left corner of the television in the vertical direction is y, the coordinates of the point are (x, y), that is, the absolute coordinates of the cursor are (x, y).

In the embodiment, the point which is located on the two-dimensional code graph paper and read by the two-dimensional code reading device is the minimum point on the two-dimensional code graph paper. The minimum point includes corresponding two-dimensional code coordinate information, that is, the two-dimensional code value. Thus, the two-dimensional code value sent to the television is the two-dimensional code value of the minimum point read by the two-dimensional code reading device when the two-dimensional code reading device moves on the two-dimensional code graph paper. The efficiency of moving the cursor can be improved by sending the data to the television. In detail, the two-dimensional code reading device reads the minimum point on the two-dimensional code graph paper and stores the data of the minimum point such that the television can use the data to calculate the distance between the point and other points.

In detail, in the embodiment, the distance between two adjacent minimum points on the same coordinate axis is preferably 1, and the ratio of the coordinate system of the two-dimensional code graph paper to the coordinate system of the cursor of the television is 1:1, that is, the moving distance of the two-dimensional code reading device on the two-dimensional code graph paper is equal to the moving distance of the cursor on the coordinate system of the cursor. In other embodiments, the distance between two adjacent minimum points on the same coordinate axis, and the ratio of the coordinate system of the two-dimensional code graph paper to the coordinate system of the cursor of the television can be set according to actual requirements, which is not limited herein.

It is noted that the above data can be values and other type of information such as characters, which is not limited herein.

Referring to FIG. 2, which is a schematic view of a two-dimensional code graph paper of the method of FIG. 1 in accordance with a first embodiment. For example, in the coordinate system with point A as the origin, the direction from A to D as the positive direction of the X axis, and the direction form A to C as the positive direction of the Y axis, by calculating the data of four points around the origin, four relative distances can be obtained which are respectively -2 in the X axis, 2 in the Y axis, 1 in the X axis, and -1 in the Y axis. If the two-dimensional code reading device moves from point B, the two-dimensional code reading device is capable of calculating the relative value between two points by obtaining the two dimensional code value of point B and the two dimensional code value of any other point. For example, when the two-dimensional code reading device moves from point B to point A, the relative value is 2 in the X axis; when the two-dimensional code reading device moves from point B to point D, the relative value is 3 in the X axis; when the two-dimensional code reading device moves from point B to point C, the relative values are 2 in the X axis and 2 in the Y axis. Thus, during the operation of moving the cursor by users, after the two-dimensional code value is sent to the television, the television can obtain the relative value between the starting point and the ending point of the two-dimensional code reading device by analyzing the two-dimensional code value, calculate the absolute coordinates of the cursor after the cursor moves according to the relative value and the position of the current cursor, and display the new cursor at the point corresponding to the absolute coordinates, thereby finishing the operation of moving the cursor.

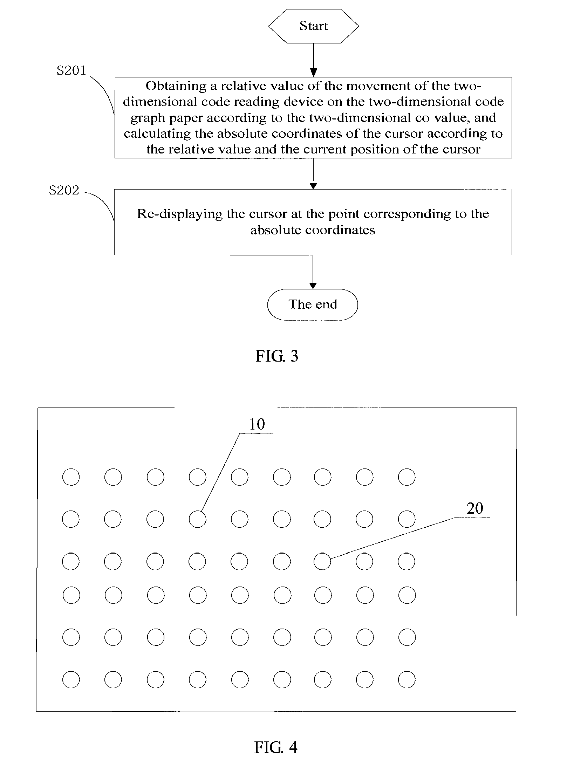

Referring to FIG. 3, which is a flow chart of a television processing step of the method of FIG. 1 in accordance with a first embodiment. Specifically, the above step S20 includes:
step S201, calculating the relative value of the movement of the two-dimensional code reading device moves on the two-dimensional code graph paper according to the above two-dimensional code value, and calculating the absolute coordinates of the cursor according to the relative value and the position of the current cursor; and step S202, re-displaying the cursor at the corresponding point according to the absolute coordinates.

As shown in FIG. 4, which is a schematic view of a two-dimensional code graph paper of the method of FIG. 1 in accordance with a second embodiment, for example, a set of hexadecimal data formed by eight characters are stored for each point shown in FIG. 4. For example, in the set of hexadecimal data A04BC34E, the former four characters stores the row number of the current point, and the later four characters stores the column number of the current point; and the distance two adjacent points in each row or column is preset to be 1, that is, the distance between two minimum points in the same axis is 1. When users continuously move the cursor, the two-dimensional code reading device obtains the two-dimensional code value of each point through which the device passes and further sends the obtained two-dimensional code value to the television.

When users move the two-dimensional code reading device from point 10 to point 20, the device sends the two-dimensional code values of the two points to the television; after receiving the two-dimensional code values of the two points, the television subtracts the former four characters of the point 20 from the former four characters of the point 10 to obtain the change of the row number, and subtracts the later four characters of the point 20 from the later four characters of the point 10 to obtain the change of the column number. For example, in the embodiment, from point 10 to point 20, the change of the row number is 1 and the change of the column number is 3. Positive and negative row numbers respectively represent the positive and negative directions of the Y axis; if the row number is positive, it indicates that the device moves downwards; if the row number is negative, it indicates that the device moves upwards. The positive and negative column numbers respectively represent the positive and negative directions of the X axis; if the column number is positive, it indicates that the device moves rightwards; if the column is negative, it indicates the device moves leftwards. Thus, the offset values in the X axis direction and the Y axis direction, that is, the above relative values are respectively 3 and 1.

After calculating the relative values, the television begins to calculate the absolute coordinates of the cursor. For example, when the resolution of the browser is 1360*768, the coordinate system of the television is (0, 0)~(1360, 768), and the default position of the cursor is in the middle of the screen, then the default coordinates of the cursor are (680, 384). If the operation is the first operation of the browser after the browser is started, then the cursor moves three units of distance in the positive direction of the X axis and one unit of distance in the positive direction of the Y axis from the default position (680, 384). Since the minimum distance is preset to be 1, that is, the distance between two adjacent minimum points on the same axis is 1, thus, the absolute coordinates generated due to the operation of moving the cursor are (683, 385).

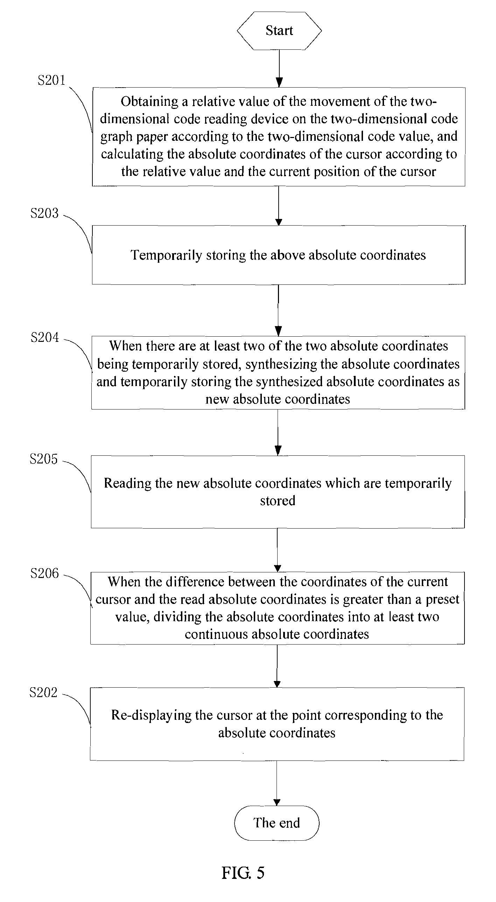

Furthermore, referring to FIG. 5 which is a flow chart of a television processing step of the method of FIG. 1 in accordance with a second embodiment, the method further includes following steps before the step S202:
Step S203, temporarily storing the above absolute coordinates.
Step S204, when there are at least two of the absolute coordinates being temporarily stored, synthesizing the above absolute coordinates and temporarily storing the synthesized absolute coordinates as the new absolute coordinates.
Step S205, reading the new absolute coordinates which are temporarily stored.

In the embodiment, after the television temporarily stores the calculated absolute coordinates, the browser reads the temporarily-stored absolute coordinates. When the speed that the browser reads the absolute coordinates is slower than the speed that the absolute coordinates are stored, that is, when there are at least two of the absolute coordinates being temporarily stored, the temporarily-stored absolute coordinates which are still not read by the browser can be synthesized to be one or several new absolute coordinates. The new absolute coordinates are restored and sent to the browser. In detail, the number of the synthesized absolute coordinates can be determined according to temporarily-stored absolute coordinates accumulated in the television.

Step S206, when the distance between the current coordinates of the cursor and the read absolute coordinates is greater than a preset value, dividing the absolute coordinates into at least two continuous absolute coordinates.

For example, when there are five of the absolute coordinates being temporarily stored, and the five absolute coordinates are synthesized to be one absolute coordinates, then the difference between the absolute coordinates and the current coordinates of the cursor may be greater than the preset value. It is noted that even if the five absolute coordinates are not synthesized, the difference between the absolute coordinates and the current coordinates of the cursor may also be greater than the preset value. At this time, the browser divides the read absolute coordinates into several continuous absolute coordinates such that the distance between two adjacent divided points is less than the preset value and further draws the corresponding moving trace of the cursor.

It is noted that the above preset value can be set according to actual requirements and is not limited herein.

In the embodiment, by the process of temporarily storing the absolute coordinates and the process of dividing the absolute coordinates, the operation of drawing the cursor by the browser can be simplified, the reacting speed of the cursor movement can be increased, and a smooth curve of the cursor can be obtained.

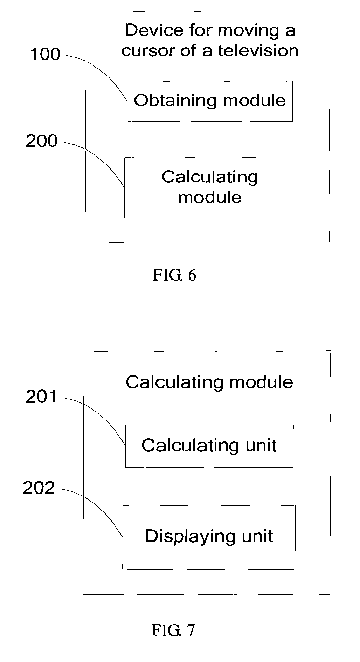

The present disclosure further provides a device of moving a cursor of a television for implementing the above method. Referring to FIG. 6 which is a schematic view of a device for moving a cursor of a television in accordance with a first embodiment of the present disclosure, the device includes an obtaining module 100, a calculating module 200, and a displaying module..

The obtaining module 100 is configured for obtaining a two-dimensional code value of a two-dimensional code reading device on a two-dimensional code graph paper.

The two-dimensional code graph paper is at first formed to include two-dimensional code coordinate information. When being placed on the two-dimensional code graph paper, the two-dimensional code reading device (such as a talking pen) obtains the two-dimensional code value thereof on the two-dimensional code graph paper in real time and sends the two-dimensional code value to a television. The television receives the two-dimensional code value in real time. In detail, the television is provided with an obtaining module 100 which obtains the two-dimensional code value sent from the two-dimensional code reading device in real time. Preferably, the two-dimensional code value can be sent to the television by infrared emission; the obtaining module 100 includes an infrared receiving circuit for receiving the two-dimensional code value sent from the two-dimensional code reading device.

In the embodiment, preferably, the above two-dimensional code reading device is built in a controller. In other embodiments, the two-dimensional code reading device can be independent of the controller, which is not further limited here.

The calculating module 200 is configured for obtaining absolute coordinates of the cursor according to the above two-dimensional code value and the position of the current cursor.

Taking a browser application module of the above television as an example, at first, the browser is started. After receiving the two-dimensional code value sent from the two-dimensional code reading device, the obtaining module 100 outputs the two-dimensional code value to the calculating module 200. The calculating module 200 thus calculates the absolute coordinates of the cursor according to the two-dimensional code value and the position of the current cursor.

The displaying module is configured for re-displaying the cursor according to the above absolute coordinates.

In the embodiment, the browser is a part of the displaying module. The calculating module 200 sends the absolute coordinates to the displaying module and the displaying module further sends the absolute coordinates to the browser. After receiving the absolute coordinates, the browser erases the current cursor and re-draws the cursor at the point corresponding to the absolute coordinates, thereby finishing the operation of moving the cursor.

It is noted that the two-dimensional code graph paper is preferable in the embodiment. In other embodiments, the two-dimensional code graph paper can be replaced by other media which can convert the coordinate information of the television to the two-dimensional code value such as a two-dimensional code coordinate board.

In the embodiment, the obtaining module 100 obtains the two-dimensional code value of the two-dimensional code reading device on the two-dimensional code graph paper in real time and further outputs the two-dimensional code value to the calculating module 200; the calculating module 200 calculates the absolute coordinates of the cursor according to the relative value and sends the absolute coordinates to the displaying module; and the displaying module displays the new cursor at the point corresponding to the absolute coordinates. Therefore, the device for moving a cursor of a television provided in the present disclosure can be easily operated and used.

The two-dimensional code, absolute coordinates, and relative value are defined with reference to above description of the method, which is not given in detail herein.

Specifically, the above calculating module 200 is configured for calculating the relative value of the movement of the two-dimensional code reading device on the two-dimensional code graph paper, and calculating the absolute coordinates of the cursor according to the relative value and the position of the current cursor.

When receiving the infrared signal sent from the two-dimensional code reading device, the obtaining module 100 decodes two-dimensional code information from the infrared signal and sends the two-dimensional code to the calculating module 200. The calculating module 200 calculates the relative value of the movement of the two-dimensional code reading device on the two-dimensional code reading device according to the relative value, calculates the absolute coordinates of the cursor after the cursor moves according to the relative value and the position of the current cursor, and outputs the absolute coordinates to the displaying module. The displaying module displays the cursor at the point corresponding to the absolute coordinates.

The method for calculating the relative value and the absolute value are similar to that in the above description.

Referring to FIG. 7 which is a schematic view of an analyzing and processing module of the device, in an embodiment, the calculating module 200 includes a calculating unit 201 and a displaying unit 202.

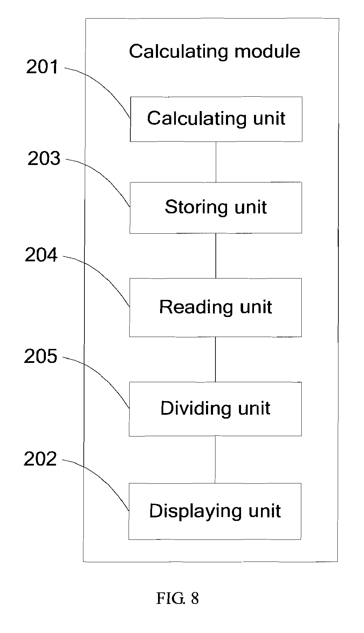

Referring to FIG. 8 which is a schematic view of a device for moving a cursor of a television in accordance with a second embodiment of the present disclosure, the device in the embodiment further includes a storing unit 203, a reading unit 204, and a dividing unit 205.

The storing unit 203 is configured for temporarily storing the above absolute coordinates.

The above calculating unit 201 is further configured for, when there are at least two of the absolute coordinates being temporarily stored, synthesizing the absolute coordinates and storing the synthesized absolute coordinates as the new absolute coordinates.

The reading device 204 is configured for reading the new absolute coordinates which are temporarily stored.

After calculating the absolute coordinates of the cursor after the cursor moves, the calculating unit 201 outputs the absolute coordinates to the storing unit 203 such that the absolute coordinates are temporarily stored. The reading device stored in the browser reads the absolute coordinates temporarily stored in the storing unit 203 and outputs the read absolute coordinates to the displaying unit 202 for displaying.

When there are at least two of the absolute coordinates being temporarily stored in the storing unit 203, the calculating unit 201 synthesizes the absolute coordinates stored in the storing unit 203, and the synthesized absolute coordinates are stored in the storing unit 203 as the new absolute coordinates.

The dividing unit 205 is configured for dividing the absolute coordinates into at least two continuous absolute coordinates when the difference between the read absolute coordinates and the coordinates of the current cursor is greater than a preset value.

At first, the preset value is set in the dividing unit 205 of the browser. When the preset value read by the reading unit 204 is relatively great, that is, the moving distance of the cursor is greater than the preset value, the dividing unit 205 divides the absolute coordinates into at least two continuous absolute coordinates and outputs the absolute coordinates to the displaying unit 202 such that the displaying unit 202 can draw the moving trace of the cursor at corresponding points.

It is noted that in other embodiments the dividing unit 205 can divide the absolute coordinates into more than or less than two continuous absolute coordinates, which is not limited herein.

Even though information and the advantages of the present embodiments have been set forth in the foregoing description, together with details of the mechanisms and functions of the present embodiments, the disclosure is illustrative only; and that changes may be made in detail, especially in matters of shape, size, and arrangement of parts within the principles of the present embodiments to the full extend indicated by the broad general meaning of the terms in which the appended claims are expressed.

## Claims

1. A method for moving a cursor of a television, comprising:
obtaining a two-dimensional code value of a two-dimensional code reading device on a two-dimensional code graph paper in real time;
calculating absolute coordinates of the cursor according to the two-dimensional code value and a position of the current cursor; and
re-displaying the cursor according to the absolute coordinates.

2. The method of claim 1, wherein the step of calculating absolute coordinates of the cursor according to the two-dimensional code value and a position of the current cursor comprises:
obtaining a relative value of the movement of the two-dimensional code reading device on the two-dimensional code graph paper according to the two-dimensional code value, and calculating the absolute coordinates of the cursor according to the relative value and the position of the current cursor.

3. The method of claim 1 further comprising following steps before the step of re-displaying the cursor according to the absolute coordinates:
temporarily storing the absolute coordinates;
when there are at least two of the absolute coordinates being temporarily stored, synthesizing the absolute coordinates and temporarily storing the synthesized absolute coordinates as new absolute coordinates; and
reading the new absolute coordinates which are temporarily stored.

4. The method of claim 3 further comprising the following step after the step of reading the new absolute coordinates which are temporarily stored:
when the difference between the coordinates of the current cursor and the read absolute coordinates is greater than a preset value, dividing the absolute coordinates into at least two continuous absolute coordinates.

5. The method of claim 2 further comprising following steps before the step of re-displaying the cursor according to the absolute coordinates:
temporarily storing the absolute coordinates;
when there are at least two of the absolute coordinates being temporarily stored, synthesizing the absolute coordinates and temporarily storing the synthesized absolute coordinates as new absolute coordinates; and
reading the new absolute coordinates which are temporarily stored.

6. The method of claim 5 further comprising the following step after the step of reading the new absolute coordinates which are temporarily stored:
when the difference between the coordinates of the current cursor and the read absolute coordinates is greater than a preset value, dividing the absolute coordinates into at least two continuous absolute coordinates.

7. A device for moving a cursor of a television, comprising:
an obtaining module configured for obtaining a two-dimensional code value of a two-dimensional code reading device on a two-dimensional code graph paper in real time;
a calculating module configured for calculating absolute coordinates of the cursor according to the two-dimensional code value and a position of the current cursor; and
a displaying module configured for re-displaying the cursor according to the absolute coordinates.

8. The device of claim 7, wherein the calculating module is further configured for calculating a relative value of the movement of the two-dimensional code reading device on the two-dimensional code reading device according to the two-dimensional code value, and calculating absolute coordinates of the cursor according to the relative value and the position of the current cursor.

9. The device of claim 7 further comprising:
a storing unit configured for temporarily storing the absolute coordinates;
the calculating module being further configured for, when there are at least two of the absolute coordinates being temporarily stored, synthesizing the absolute coordinates and temporarily storing the synthesized absolute coordinates as new absolute coordinates; and
a reading unit configured reading the new absolute coordinates which are temporarily stored.

10. The device of claim 9 further comprising a dividing unit configured for, when the difference between the coordinates of the current cursor and the read absolute coordinates is greater than a preset value, dividing the absolute coordinates into at least two continuous absolute coordinates.

11. The device of claim 8 further comprising:
a storing unit configured for temporarily storing the absolute coordinates;
the calculating module being further configured for, when there are at least two of the absolute coordinates being temporarily stored, synthesizing the absolute coordinates and temporarily storing the synthesized absolute coordinates as new absolute coordinates; and
a reading device configured for reading the new absolute coordinates which are temporarily stored.

12. The device of claim 11 further comprising a dividing unit configured for, when the difference between the coordinates of the current cursor and the read absolute coordinates is greater than a preset value, dividing the absolute coordinates into at least two continuous absolute coordinates.
